Europäisches Patentamt

European Patent Office

Office européen des brevets

(19)

(11) EP 0 567 155 B1

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int Cl.⁶: **F16D 66/02**

(21) Anmeldenummer: **93106674.0**

(22) Anmeldetag: **23.04.1993**

(54) **Verschleissüberwachungsvorrichtung für eine Gleitsattel-Scheibenbremse**

Wear surveillance device for a sliding caliper disc brake

Dispositif de surveillance d'usure pour un frein à disque à étrier glissant

(84) Benannte Vertragsstaaten:
**FR GB IT SE**

(30) Priorität: **24.04.1992 DE 4213581**
**16.04.1993 DE 4312377**

(43) Veröffentlichungstag der Anmeldung:
**27.10.1993 Patentblatt 1993/43**

(73) Patentinhaber: **DEUTSCHE PERROT-BREMSE GmbH**
**W-6800 Mannheim 71 (DE)**

(72) Erfinder:
• **Herbert, Andreas, Dipl.-Ing.**
**W-6100 Darmstadt (DE)**

• **Jäger, Hellmut, Dipl.-Ing.**
**W-6803 Edingen-Neckarhausen 1 (DE)**
• **Rupprecht, Bernd**
**W-6803 Edingen-Neckarhausen 2 (DE)**
• **Strauss, Wilfried, Dipl.-Ing.**
**W-6948 Wald-Michelbach (DE)**
• **Antony, Paul, Dipl.-Ing.**
**W-6520 Worms 31 (DE)**

(74) Vertreter: **Patentanwälte**
**Leinweber & Zimmermann**
**Rosental 7/II Aufg.**
**D-80331 München (DE)**

(56) Entgegenhaltungen:
**EP-A- 0 381 947**      **EP-A- 0 492 143**
**DE-A- 3 816 949**      **DE-A- 3 921 294**

**Beschreibung**

Die Erfindung betrifft eine Verschleißüberwachungsvorrichtung für eine Gleitsattel-Scheibenbremse, mit einer Bremsscheibe, einem verschieblichen, die Bremsscheibe übergreifenden Bremssattel, einem von einer Betätigungseinrichtung über den Bremssattel felgenseitig an der Bremsscheibe unter Druck anlegbaren ersten Bremsbelag und einem unmittelbar von der Betätigungseinrichtung betätigungsseitig an der Bremsscheibe unter Druck anlegbaren zweiten Bremsbelag, wobei die Verschleißüberwachungsvorrichtung einen ersten Sensor für den Verschleiß eines der Bremsbeläge sowie eine Verschleißanzeigeeinrichtung aufweist.

Eine Verschleißüberwachungsvorrichtung der eingangs genannten Art ist in der DE 37 07 821 A1 gezeigt. Mit dieser bekannten Verschleißüberwachungsvorrichtung kann jedoch nur der Verschleiß für den felgenseitigen (ersten) Bremsbelag erfaßt werden, d.h. für denjenigen Bremsbelag, der indirekt über den Bremssattel beaufschlagt wird. Über den Verschleiß des betätigungsseitigen (zweiten) Bremsbelages ist keine Aussage möglich.

Eine ähnliche Verschleißüberwachungsvorrichtung zeigt die EP 0 093 657 A1. Auch hier bezieht sich die Überwachung lediglich auf den felgenseitigen (ersten) Bremsbelag.

Die aus der DE-OS 32 47 865 bekannte Verschleißüberwachungsvorrichtung ermittelt den Belagverschleiß aus dem Niveau der Bremsflüssigkeit in dem zugehörigen Hydrauliksystem. Daraus kann jedoch nur das gesamte Verschleißvolumen für beide bzw. alle Beläge ermittelt werden. Da aber insbesondere bei Gleitsattel-Scheibenbremsen betätigungsseitig ein größerer Verschleiß als felgenseitig auftritt, ist eine getrennte Überwachung der beiden Beläge unabdingbar, indes mit dem in der DE-OS 32 47 865 beschriebenen Prinzip nicht möglich.

Die DE-OS 30 07 887 zeigt einen Verschleißsensor, der in den zu überwachenden Bremsbelag zu integrieren ist. Dieser nützt sich mit dem Belag ab und gibt je nach Windungszahl stufenlos oder stufenweise Auskunft über den Verschleißgrad des Bremsbelages. Damit ist zwar eine Überwachung jedes einzelnen Bremsbelages unabhängig von dem anderen möglich. Nachteilig ist jedoch, daß sich beide Verschleißsensoren mit der Zeit abnutzen und daher nicht wiederverwendbar sind.

Die DE 40 41 318 A1 beschreibt eine Verschleißüberwachungsvorrichtung für eine durch Druckmittel betätigbare Scheibenbremse mit einem Nachstellelement, wobei das Nachstellelement als Drehwinkelgeber für die Belagverschleißsensierung dient. Damit kann auch diese Vorrichtung nur den Gesamtverschleiß für beide Beläge, nicht jedoch getrennt voneinander ermitteln, vgl. die DE-OS 32 47 865. Die DE 40 41 318 A1 ist am 25. Juni 1992 offengelegt worden und geht auf eine Anmeldung vom 21.Dezember 1990 zurück. Die vorliegende Anmeldung beansprucht demgegenüber die Priorität der deutschen Patentanmeldung P 42 13 581.8 vom 24. April 1992. Die DE 40 41 318 A1 ist damit als zwar prioritätsälterer, aber nachveröffentlichter Stand der Technik anzusehen.

Schließlich ist zum Stand der Technik noch auf folgende Druckschriften hinzuweisen, die allerdings Festsattelscheibenbremsen betreffen:

Aus der DE-OS 22 54 990 ist eine Verschleißüberwachungsvorrichtung mit einem Widerstandsgeber und einem von diesem angesteuerten Anzeigesystem bekannt. Der Widerstandsgeber besteht dabei aus teleskopartig ineinandergeschobenen und relativ zueinander beweglichen Teilen. Die Teile sind an ihrem Übergang mit einer gummielastischen Manschette umgeben. Einer der Teile trägt den Widerstand, und der andere ist mit einem Schleifkontakt versehen. Ferner steht einer der beiden Teile in Wirkverbindung mit einem Bremsbelagträger.

Die DE-OS 21 44 521 beschreibt eine Abnutzungsanzeige für Bremsbeläge mit einem Meßorgan. Das Meßorgan besteht dabei aus mindestens einem druckempfindlichen Element und mindestens einem Druckgeber. Einer von beiden ist an dem Bremsbelagträger der Bremse gehalten, und der andere ist an dem festen Teil der Bremse gehalten. Ferner ist mindestens einer von beiden über Federmittel mit einer Halterung verbunden.

Der Erfindung liegt die Aufgabe zugrunde, eine Verschleißüberwachungsvorrichtung der eingangs genannten Art zu schaffen, die einfach aufgebaut ist und leicht zu installieren ist, aber dennoch die Überwachung der Bremsbeläge einzeln, d.h. unabhängig voneinander erlaubt.

Erfindungsgemäß wird die gestellte Aufgabe durch einen zweiten Sensor für den kumulierten Verschleiß beider Bremsbeläge gelöst.

Dabei liegt der Erfindung die verblüffend einfache Erkenntnis zugrunde, daß bei Überwachung des Verschleißes eines der Bremsbeläge, wie sie aus dem Stand der Technik bekannt ist, durch die gleichzeitige Erfassung des kumulierten Verschleißes beider Bremsbeläge genügend Informationen vorliegen, um Aussagen über den Zustand jedes einzelnen Bremsbelages zu machen. Gleichzeitig kann die Verschleißüberwachungsvorrichtung besonders einfach aufgebaut sein, weil keine zwei die Verschiebung der beiden Bremsbeläge direkt erfassenden Sensoren erforderlich sind, sondern mindestens einer, nämlich der Sensor für den kumulierten Verschleiß nicht unbedingt mit einem Bremsbelag oder dessen Träger in Verbindung stehen muß. Vielmehr kann der Sensor für den kumulierten Verschleiß mit ausreichendem Abstand von den Belägen oder den Belagträgern angeordnet sein, was die Installation besonders leicht macht.

Besonders einfach ist die Installation des für die Messung des kumulierten Verschleißes vorgesehenen Sensors, wenn er den Verschiebeweg des Bremssattels gegenüber der Betätigungseinrichtung beim Bremsen erfaßt.

In einer Ausgestaltung der Erfindung kann der erste Sensor ein in den Belag integriertes und sich mit dem Belag abnützendes Element aufweisen. Er kann aber auch als Drucksensor ausgeführt sein.

Nach einer weiteren Ausgestaltung der Erfindung kann der Bremssattel eine Aufnahmeöffnung für die Betätigungseinrichtung aufweisen, wobei der zweite Sensor in Ausnehmungen an der Innenfläche der Aufnahmeöffnung, im Bremssattel bzw. an der Mantelfläche der Betätigungseinrichtung angeordnet ist.

Dabei kann es sich bei dem zweiten Sensor um ein Verschiebepotentiometer handeln.

Ferner kann eine Einrichtung vorgesehen sein zum Umsetzen der Drehbewegung einer Nachstellspindel in eine dem kumulierten Verschleiß entsprechende translatorische Bewegung. Dadurch kann der zweite Sensor entfernt von der Betätigungseinrichtung angeordnet werden, wo er leicht zugänglich ist.

Erfahrungsgemäß verschleißt der betätigungsseitige Bremsbelag schneller als der felgenseitige Bremsbelag. Nach einer besonders bevorzugten Ausführungsform der Erfindung ist daher vorgesehen, daß die Anzeigeeinrichtung einen bei Erreichen eines Grenzverschleißes des betätigungsseitigen Bremsbelages aktivierten Alarmgeber aufweist.

Zwar verschleißt - wie bereits oben erwähnt - der betätigungsseitige Bremsbelag schneller als der felgenseitige Bremsbelag, jedoch liegen die beiden Verschleißwerte in etwa in einer Größenordnung, solange keine Störungen auftreten. Für den störungsfreien Betrieb genügt damit eigentlich die Erfassung des kumulierten Verschleißes beider Beläge. Es kann aber nicht ausgeschlossen werden, daß infolge von Störungen, wie beispielsweise erhöhte Reibung, Verklemmen usw. der Bremssattel in seiner Verschieblichkeit beeinträchtigt ist, was dazu führt, daß die Hauptbremskraft von dem betätigungsseitigen Bremsbelag erzeugt wird. Mit anderen Worten wird in aller Regel bei Störungen der betätigungsseitige Bremsbelag besonders schnell verschleißen.

Erfindungsgemäß kann es daher nach einer weiter bevorzugten Ausführungsform vorgesehen sein, daß der erste Sensor das Erreichen eines vorbestimmten Grenzverschleißes an dem betätigungsseitigen Bremsbelag erfaßt.

In diesem Fall erfaßt die Verschleißüberwachungsvorrichtung quantitativ nur den kumulierten Belagverschleiß. Diese quantitative Aussage genügt bei störungsfreiem Betrieb, weil ohne Störungen davon ausgegangen werden kann, daß beide Bremsbeläge in etwa dem gleichen Verschleiß unterliegen. Für den Fall jedoch, daß eine Störung, wie etwa Verklemmen des Bremssattels o. dgl. auftritt, was zu einem erhöhten Verschleiß des betätigungsseitigen Bremsbelages führt, kann wegen der beschriebenen Ausgestaltung des ersten Sensors das Erreichen eines vorbestimmten Grenzverschleißes erfaßt werden, und die erforderlichen Maßnahmen, wie Beheben der Störung, Auswechseln der Bremsbeläge usw. können ergriffen werden.

Mithin kommt diese Ausgestaltung der Erfindung mit einem besonders einfach aufgebauten ersten Sensor, nämlich einem Grenzwertsensor aus. Sie erfaßt im störungsfreien Betrieb den kumulierten Verschleiß beider Bremsbeläge, aus dem einfach auf den Verschleiß jedes einzelnen Bremsbelages bis zum Erreichen des Grenzverschleißes durch Aktivierung des Grenzwertsensors geschlossen werden kann, und bietet dennoch für den Störungsfall ausreichende Sicherheit. Das Erreichen eines vorbestimmten Grenzwertes für den im Störungsfall dem größeren Verschleiß unterliegenden Bremsbelag wird nämlich zuverlässig erfaßt. Diese Ausgestaltung der Erfindung bietet daher bei denkbar geringem Aufwand ausreichende Informationen über den Verschleiß und gleichzeitig größtmögliche Sicherheit.

Soll jedoch durchgängig eine Information über den Verschleiß jedes einzelnen Bremsbelages auch quantitativ gewünscht werden, so sieht eine weitere Ausgestaltung der Erfindung vor, daß der erste Sensor den Verschleiß des felgenseitigen Bremsbelages erfaßt und eine Auswerteinrichtung aus dem kumulierten Verschleiß beider Bremsbeläge und dem Verschleiß des felgenseitigen Bremsbelages den Verschleiß des betätigungsseitigen Bremsbelages ermittelt.

Mit anderen Worten wird der Verschleiß des betätigungsseitigen Bremsbelages nicht direkt gemessen, sondern aus dem kumulierten Verschleiß und dem Verschleiß des felgenseitigen Bremsbelages errechnet. Dies hat Vorteile, weil die Kapselung der Betätigungseinrichtung eine genaue quantitative Erfassung des betätigungsseitigen Bremsbelagverschleisses direkt sehr schwierig macht.

Dabei kann vorgesehen sein, daß der erste Sensor ein Verschiebepotentiometer ist.

Ferner ist es bevorzugt, daß der Bremssattel auf mindestens einem Gleitbolzen geführt ist, welcher fest an einem Bremsenträger angebracht ist, wobei der erste Sensor den Verschiebeweg des Bremssattels bezüglich dem Gleitbolzen aufnimmt. Mithin dient bei dieser Ausgestaltung der Gleitbolzen bzw. der Bremsenträger als ortsfester Bezugspunkt zur Bestimmung bzw. Erfassung des entsprechenden Verschiebeweges des Bremssattels.

Um den ersten Sensor vor Umwelteinflüssen zu schützen, ist es erfindungsgemäß vorgesehen, daß der erste Sensor in Ausnehmungen an der Innenfläche einer den Gleitbolzen aufnehmenden Führungsbohrung bzw. an der Mantelfläche des Gleitbolzens angeordnet ist.

Die Auswerteinrichtung kann einen Operationsverstärker umfassen.

Zu Kalibrierungszwecken kann schließlich eine Einrichtung für einen Nullpunktabgleich im Hinblick auf das Lüftspiel der Bremse vorgesehen sein.

Nachstehend ist die Erfindung anhand bevorzugter Ausführungsbeispiele unter Bezugnahme auf die beiliegende Zeichnung mit weiteren Einzelheiten näher erläutert. Dabei zeigen

Fig. 1 einen quer zur Bremsscheibeebene ausgeführten Schnitt durch eine Bremse mit einem Ausführungsbeispiel der erfindungsgemäßen Verschleißüberwachungsvorrichtung,

Fig. 2 Schaltungen zum Verarbeiten von Signalen von Sensoren sowie zum Anzeigen des Bremsbelagverschleißes nach einem Ausführungsbeispiel der Erfindung,

Fig. 3 einen entsprechend Figur 1 ausgeführten Schnitt durch eine Bremse mit einem zweiten Ausführungsbeispiel der erfindungsgemäßen Verschleißüberwachungsvorrichtung und

Fig. 4 einen entsprechend Figur 1 ausgeführten Schnitt durch eine Bremse mit einem dritten Ausführungsbeispiel der erfindungsgemäßen Verschleißüberwachungsvorrichtung

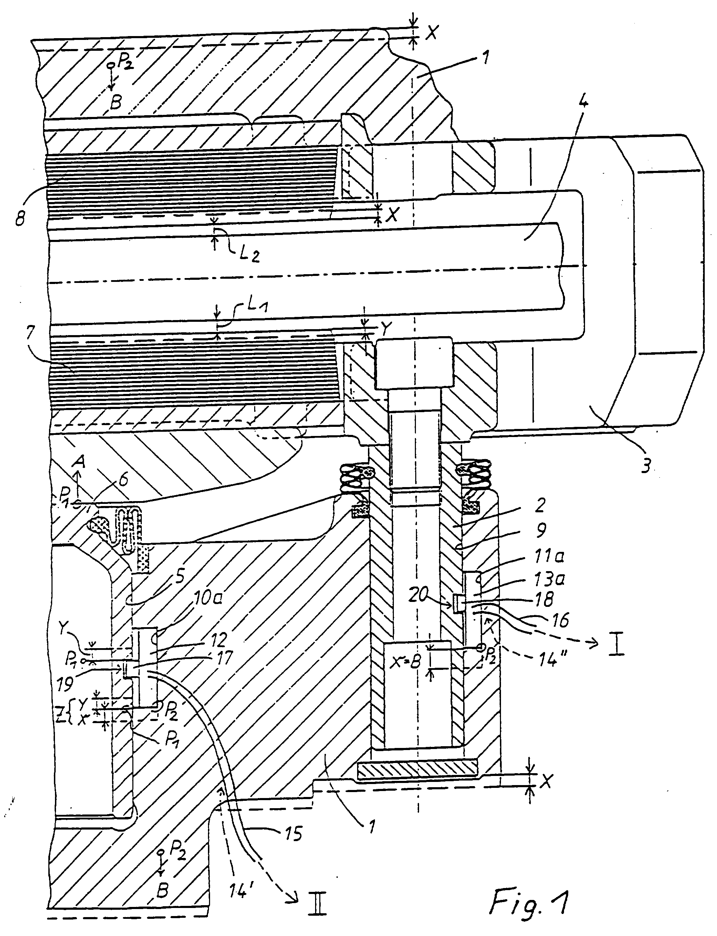

Gemäß Fig. 1 umfaßt eine Gleitsattel-Scheibenbremse einen auf mindestens einem Gleitbolzen 2 geführten Bremssattel 1. Der Gleitbolzen 2 ist fest an einem Bremsenträger 3 (beispielsweise durch Schrauben) angebracht und damit ortsfest bezüglich einer Bremsscheibe 4. Der Bremssattel 1 übergreift mit einem inneren und einem äußeren Sattelschenkel die Bremsscheibe 4, wobei der innere Sattelschenkel eine Aufnahmeöffnung 5 für eine Betätigungseinrichtung 6 aufweist. Beidseits der Bremsscheibe 4 sind ein erster, äußerer bzw. felgenseitiger Bremsbelag 8 sowie ein zweiter, innerer bzw. betätigungsseitiger Bremsbelag 7 angeordnet. Zum Bremsen werden der betätigungsseitige Bremsbelag 7 direkt über die Betätigungseinrichtung 6 und der felgenseitige Bremsbelag 8 indirekt über den äußeren Sattelschenkel gegen die Bremsscheibe 4 gedrückt. Dabei bewegt sich der Bremssattel 1 relativ zum Gleitbolzen 2.

Im Bremssattel 1 sind im Bereich der Aufnahmeöffnung 5 für die Betätigungseinrichtung 6 bzw. im Bereich einer Führungsbohrung 9 für den Gleitbolzen 2 je eine Ausnehmung 10a,11a zur Aufnahme und Halterung von Sensoren 12,13a ausgebildet. Die Sensoren sind bei dem hier gezeigten Ausführungsbeispiel Verschiebepotentiometer.

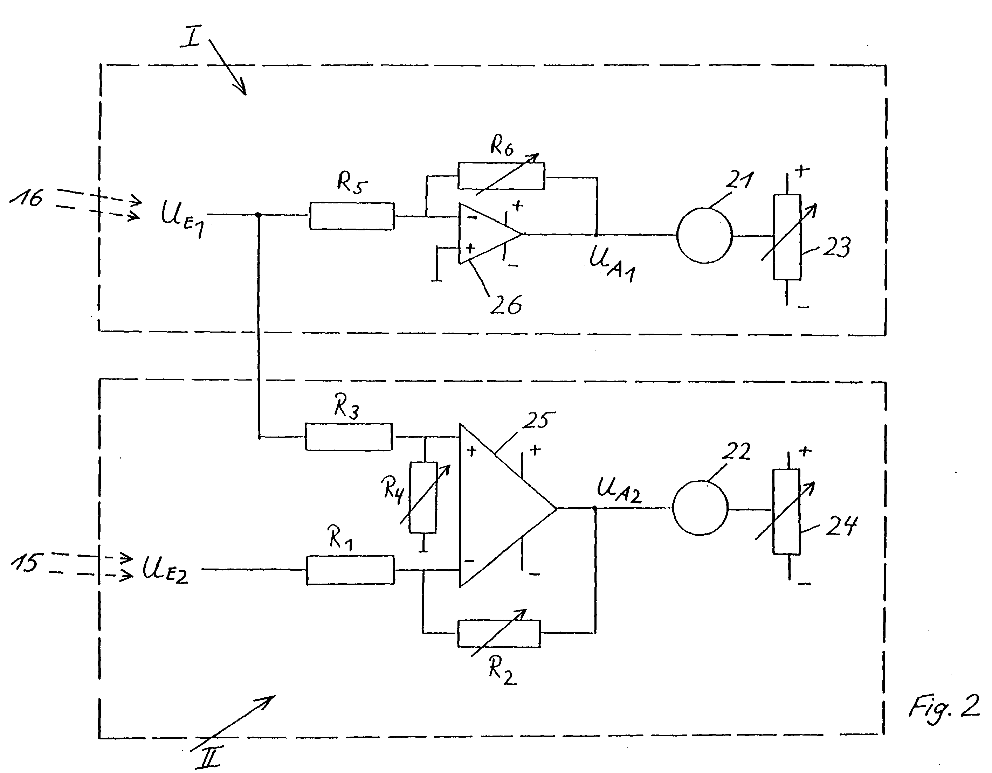

Die Ausnehmungen 10a und 11a zur Aufnahme der Verschiebepotentiometer 12 bzw. 13a sind jeweils über Kanäle (beispielsweise Bohrungen, nicht gezeigt) 14',14" nach außen verbunden. Durch diese Kanäle 14',14" sind Leitungen 15,16 geführt, mit denen die Sensoren 12,13a mit Teilschaltungen I,II (Fig. 2) zur Auswertung und zum Anzeigen verbunden sind.

Die Sensoren 12,13a umfassen jeweils einen Verschiebestift 17 bzw. 18. Der Verschiebestift 17 ragt in eine Ausnehmung 19 in der Betätigungseinrichtung 6, und der Verschiebestift 18 ragt in eine Ausnehmung 20 in dem Gleitbolzen 2.

Die Verschiebestifte 17 und 18 sind in Richtung der Stiftachse entgegen Federkraft verschiebbar und bei der Montage deshalb in die Ausnehmungen 19 bzw. 20 einrastbar.

Selbstverständlich sind auch mechanische Umkehrungen insofern möglich, daß beispielsweise der Gleitbolzen 2 am Bremssattel 1 befestigt und im Bremsenträger 3 gleitend geführt ist. Ferner können die Sensoren auch in den Ausnehmungen 19 und 20 (bei angepaßter Größe) angeordnet sein, während die zugehörigen Verschiebungsstifte 17 und 18 in die (größenmäßig angepaßten) Ausnehmungen 10a bzw. 11a ragen.

Die Auswert- bzw. Anzeigeeinrichtung nach dem hier erläuterten Ausführungsbeispiel der Erfindung umfaßt gemäß Fig. 2 zwei Teilschaltungen I und II, wobei die Teilschaltung I für die Anzeige des Verschleißes des felgenseitigen Bremsbelages 8 vorgesehen ist, während die Teilschaltung II für die Ermittlung bzw. Anzeige des Verschleißes des betätigungsseitigen Bremsbelages 7 dient. Die Teilschaltung I umfaßt eine Analoganzeige 21, ein Regulierelement 23 für den Nullpunktabgleich (steuerbarer Spannungsteiler), einen Operationsverstärker 26 sowie Widerstände $R_5$ und $R_6$. Die Teilschaltung II umfaßt eine Analoganzeige 22, ein Regulierelement 24 für den Nullpunktabgleich, einen Operationsverstärker 25 sowie Widerstände $R_1$, $R_2$, $R_3$ und $R_4$.

An die Teilschaltung I geht die von dem Sensor 13a abgegebene und mit $U_{E1}$ bezeichnete Spannung, während an die Teilschaltung II sowohl die Spannung $U_{E1}$ als auch die von dem Sensor 12 abgegebene und mit $U_{E2}$ bezeichnete Spannung gehen.

Die Funktion des in den Figuren 1 und 2 dargestellten ersten Ausführungsbeispiels der Erfindung ist wie folgt.

Bei einem Neueinbau der Bremse bzw. nach einem Belagwechsel müssen zunächst die Anzeigen 21 und 22 zur Berücksichtigung der Lüftspiele $L_1$, $L_2$ auf Null abgeglichen werden. Dafür wird die Bremse betätigt, so daß beide Bremsbeläge 7,8 gegen die Bremsscheibe 4 bewegt werden, bis sich beidseitig der Bremsscheibe 4 das entsprechende Lüftspiel eingespielt hat. Nach erfolgter Lüftspieleinstellung werden unter Anlegen beider Bremsbeläge 7,8 an die Bremsscheibe 4 durch Justieren der Regulierelemente 23 und 24 die Anzeigen 21 und 22 auf Null gestellt.

Beim normalen Bremsen wird die Betätigungseinrichtung 6 mit dem Bremsbelag 7 von einem Punkt $P_1$ in Richtung des Pfeiles A verschoben. Der Punkt $P_1$ ist mehrfach eingezeichnet, um deutlich zu machen, daß entsprechende starre Verbindungen bestehen. Bei der genannten Verschiebung von dem Punkt $P_1$ in Richtung A wird das Lüftspiel $L_1$ überschritten, und der Bremsbelag 7 gelangt zur Anlage an die Bremsscheibe 4. Da die Betätigungseinrichtung 6 bei weiterer Bremsdruckzunahme nicht weiter in Richtung A gegen die Bremsscheibe 4 gedrückt werden kann, wird über die dadurch einsetzende Reaktionskraft der Bremssattel 1 entgegengesetzt, d.h. von einem Punkt $P_2$ in Richtung B verschoben, bis nach Überwindung des Lüftspiels $L_2$ auch der folgenseitige Bremsbelag 8 durch den entsprechenden Bremssattelschenkel zur Anlage gegen die Bremsscheibe 4 gelangt. Der Punkt $P_2$ ist wiederum mehrfach eingezeichnet, um starre Verbindungen aufzuzeigen. Die Größen der beiden genannten Verschiebewege werden bei neuen, d.h. noch nicht verschlissenen Bremsbelägen wegen des anfangs beschriebenen Nullabgleichs nicht erfaßt, selbst wenn die Lüftspiele $L_1$, $L_2$ betätigungs- und felgenseitig eine unterschiedliche Größe aufweisen sollten.

Im Laufe der Zeit tritt an den Bremsbelägen 7,8 ein Verschleiß der Größe X bzw. Y (siehe Fig. 1) ein, so daß auch die axial gegenläufigen Verschiebewege der Betätigungseinrichtung 6 in Richtung A und des Bremssattels 1 in Richtung B über deren Nullstellungen ($P_1$ bzw. $P_2$ zuzüglich Lüftspiel) hinaus um diese Größen X bzw. Y zunehmen.

Der Belagverschleiß X für den felgenseitigen Bremsbelag 8 ergibt sich direkt aus der von dem Sensor 13a abgegebenen Spannung $U_{E1}$, weil sich der Bremssattel 1 mit dem Sensor 13a von $P_2$ in Richtung B verschiebt, während der Stift 18 in der Ausnehmung 20 von dem Gleitbolzen 2 bzw. dem Bremsenträger 3 festgehalten wird. Der Verschiebeweg X wird in der Teilschaltung I gemäß folgender Formel ermittelt:

$$U_{A1} = -U_{E1} \cdot R_6/R_5 \tag{1},$$

wobei $U_{A1}$ die an der Anzeigeeinrichtung 21 anliegende und dem Verschiebeweg X entsprechende Spannung ist.

Der in Fig. 1 mit Y bezeichnete und dem Verschleiß des betätigungsseitigen Bremsbelags 7 entsprechende Verschiebeweg der Betätigungseinrichtung läßt sich nicht unmittelbar aus der von dem Sensor 12 abgegebenen Spannung $U_{E2}$ ermitteln.

Vielmehr ergibt sich der Verschiebeweg Y aus der Differenz eines Verschiebeweges Z von Betätigungseinrichtung 6 und Bremssattel 1 gegeneinander und des Verschiebeweges X, weil die Verschieberichtungen A und B der Betätigungseinrichtung 6 auf der einen und des Bremssattels 1 auf der anderen Seite einander entgegengesetzt sind.

Die entsprechende Differenzbildung erfolgt in der Teilschaltung II, wobei sich die an der Anzeigeeinrichtung 22 anliegende und dem Verschiebeweg Y des betätigungsseitigen Bremsbelages 7 entsprechende Spannung $U_{A2}$ gemäß folgender Formel ergibt:

$$U_{A2} = U_{E1} \left( \frac{\left(1 + \dfrac{R_2}{R_1}\right) R_4}{R_3 + R_4} \right) - \frac{R_2}{R_1} U_{E2} \tag{2}$$

Mithin entsprechen die von den Anzeigeeinrichtungen 21 und 22 angezeigten Werte den Verschiebewegen X bzw. Y der Bremsbeläge 8 bzw. 7 aufgrund Verschleißes.

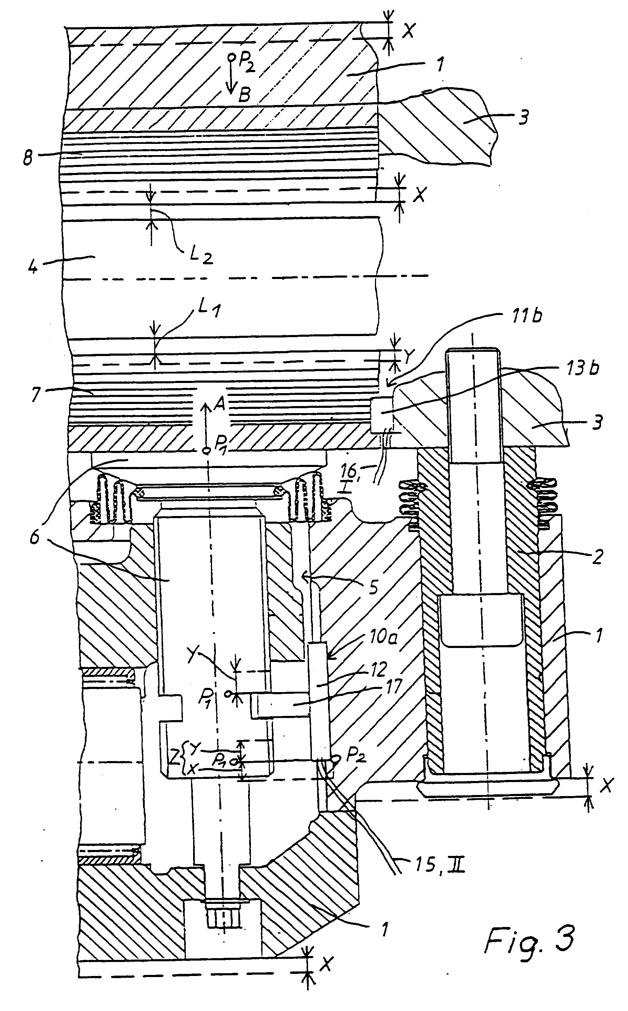

Fig. 3 zeigt ein zweites Ausführungsbeispiel der erfindungsgemäßen Verschleißüberwachungsvorrichtung. Elementen in Fig. 1 entsprechende Elemente sind mit gleichen Bezugszeichen versehen.

Auch nach dem zweiten Ausführungsbeispiel ist der Verschiebesensor 12 fest mit dem Bremssattel 1 verbunden, um sich somit von einem Punkt $P_2$ in Richtung B zunehmend um den Verschiebwert X (Verschleiß des felgenseitigen Bremsbelages 8) zu bewegen. Andererseits greift ein Verschiebestift 17 in eine Betätigungseinrichtung 6 (hier mindestens eine nachstellbare Druckspindel) ein, um zunehmend (entsprechend der Nachstellgröße) mit dieser von einem Punkt $P_1$ in eine entgegengesetzte Richtung A um den Verschiebwert Y bewegt zu werden. Die Verschiebwerte X, Y werden als Summe Z durch den Sensor 12 stufenlos erfaßt und mittels Auswerteinrichtung angezeigt. Der Wert Z entspricht somit dem beidseitigen oder kumulierten Belagverschleiß.

Der wesentliche Unterschied des in Fig. 3 dargestellten zweiten Ausführungsbeispiels zu dem ersten Ausführungsbeispiel nach Fig. 1 besteht in einem Grenz- oder Schwellwertsensor 13b. Der Sensor 13b kann direkt mit dem betätigungsseitigen Bremsbelag 7 verbunden und in einer Ausnehmung 11b angeordnet sein. Denkbar ist aber auch eine indirekte Kopplung des Sensors 13b mit dem Bremsbelag/Bremsbelagträger 7 und/oder der Betätigungseinrichtung 6. Dabei ist der Sensor 13b dann einerseits in einer beliebigen Ausnehmung 11b fest am Bremsenträger 3 befestigt, um andererseits die gegenüber diesem Festpunkt erfolgende axiale Verschiebung der Elemente 7 und/oder 6 zur Schwellwertbestimmung abzugreifen.

Selbstverständlich ist auch die umgekehrte Anordnung des Sensors 13b zur indirekten Kopplung zwischen den Elementen 3,7 und/oder 6 möglich.

Ist bei dem zweiten Ausführungsbeispiel die Bremsenfunktion (Bremssattelverschiebung, Nachstellung) und somit der Gesamtverschleiß normal, wird dies über den Sensor 12 kontinuierlich angezeigt. Erst bei Erreichen der Mindestbelagdicke des üblicherweise dem größeren Verschleiß unterliegenden Bremsbelags 7 wird der Sensor 13b aktiviert.

Für den Fall einer fehlerhaften Bremsenfunktion - und somit ungleichmäßiger Belagabnutzung - wird der Sensor 13b bereits zu einem früheren Zeitpunkt aktiviert, als es dem ermittelten kumulierten Verschleiß beider Bremsbeläge entspräche. Somit ist durch die Kombination des Sensors 12 zur quantitativen Bestimmung des kumulierten Verschleißes und des Grenzwertsensors 13b mit einfachen Mitteln neben der kontinuierlichen Verschleißermittlung gleichzeitig eine Fehlfunktionsanzeige gegeben. Diese Kontrollfunktion gilt übrigens auch für das erste Ausführungsbeispiel, wenn nämlich die ermittelten Verschleißwerte je Bremsbelag untereinander ansteigende Unregelmäßigkeiten aufweisen.

Die Auswertung und Anzeige der Verschleiß- und/oder Signalgröße erfolgt ebenfalls mittels beliebig gestalteten bzw. verschalteten Schaltkreisen I und/oder II, vergl. Fig. 2.

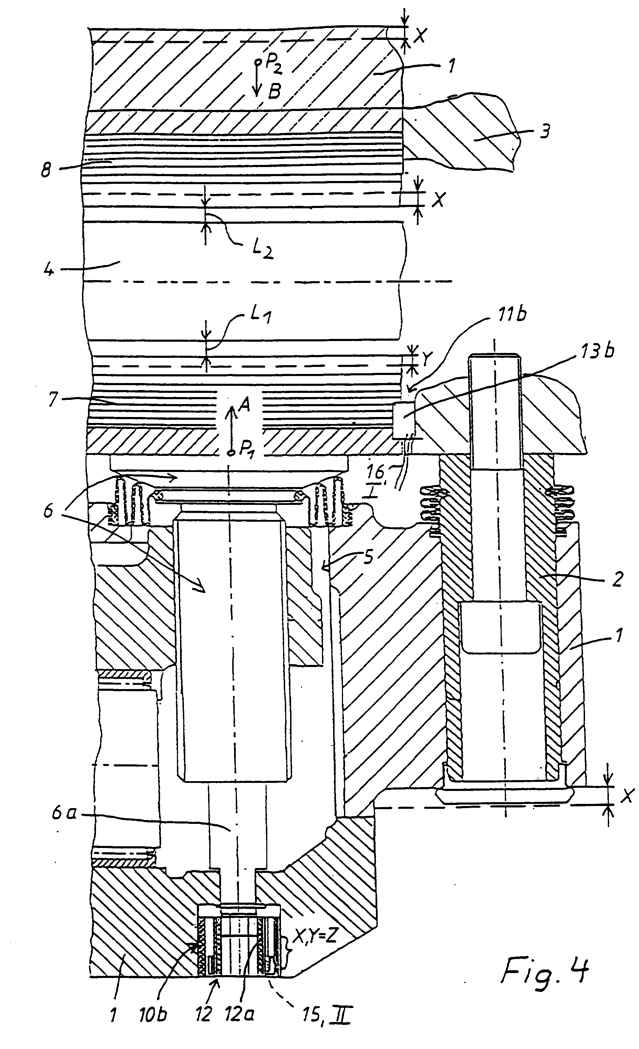

Sowohl bei dem ersten Ausführungsbeispiel als auch bei dem zweiten Ausführungsbeispiel kann der Sensor 12 wie bei dem dritten Ausführungsbeispiel nach Fig. 4 gezeigt angeordnet und in die Bremse eingebunden sein.

Demnach ist der Weg- bzw. Verschiebesensor 12 zwischen dem Bremssattel 1 und einer sich beim Nachstellen drehenden Nachstellwelle 6a angeordnet, die zum Ausgleich des Belagverschleißes auf die Betätigungseinrichtung einwirkt. In diesem Fall wird zur Ermittlung des kumulierten oder Gesamtverschleißes Z die Drehbewegung der Nachstellwelle 6a mit geeigneten Mitteln in eine Verschiebebewegung des Verschiebesensors 12 gewandelt. Dies kann durch ein Schraub- und/oder Spindelgetriebe 12a, eine Stift-Schrägnutkopplung oder ähnliches verwirklicht werden. Die Umsetzung der Drehbewegung in eine translatorische Bewegung erfolgt dabei entweder außerhalb oder - in bevorzugter Weise - innerhalb des Verschiebesensors 12. Räumlich günstig ist dabei die in Fig. 4 gezeigte Anordnung des Verschiebesensors in einer Ausnehmung 10b im Bremssattel 1. An dieser Stelle ist der Verschiebesensor 12 besonders leicht zugänglich.

Grundsätzlich können die oben erläuterten Varianten der Verschleißermittlung in den abgebildeten Bremsentypen beliebig kombiniert verwirklicht werden, weil die Verschiebe- bzw. Verschleißgrößen X,Y immer zwischen dem Bremssattel 1 und der nachstellbaren Betätigungseinrichtung 6 bzw. der mit der Betätigungseinrichtung 6 gekoppelten Nachstellwelle 6a mittels des Weg- bzw. Verschiebesensors 12 abgegriffen werden.

Bezugszeichenliste:

1 Bremssattel
2 Gleitbolzen
3 Bremsenträger
4 Bremsscheibe
5 Aufnahmeöffnung
6 Betätigungseinrichtung
7 betätigungsseitiger Bremsbelag
8 felgenseitiger Bremsbelag
9 Führungsbohrung
10 Ausnehmung
11 Ausnehmung
12 Sensor
12a Umsetzeinrichtung
13 Sensor
14 Kanal
15 Verbindungsleitung
16 Verbindungsleitung
17 Verschiebestift
18 Verschiebestift
19 Ausnehmung
20 Ausnehmung
21 Anzeigeeinrichtung
22 Anzeigeeinrichtung
23 Regulierelelment
24 Regulierelement
25 Operationsverstärker
26 Operationsverstärker
I Teilschaltung
II Teilschaltung
X Verschiebeweg
Y Verschiebeweg
Z Verschiebeweg

# EP 0 567 155 B1

**Patentansprüche**

1.  Verschleißüberwachungsvorrichtung für eine Gleitsattel-Scheibenbremse, mit einer Bremsscheibe (4), einem verschieblichen, die Bremsscheibe (4) übergreifenden Bremssattel (1), einem von einer Betätigungseinrichtung (6) über den Bremssattel (1) felgenseitig an der Bremsscheibe (4) unter Druck anlegbaren ersten Bremsbelag (8) und einem unmittelbar von der Betätigungseinrichtung (6) betätigungsseitig an der Bremsscheibe (4) unter Druck anlegbaren zweiten Bremsbelag (7), wobei die Verschleißüberwachungsvorrichtung einen ersten Sensor (13a, 13b) für den Verschleiß eines der Bremsbeläge (7, 8) sowie eine Verschleißanzeigeeinrichtung (21, 22) aufweist, gekennzeichnet durch einen zweiten Sensor (12) für den kumulierten Verschleiß beider Bremsbeläge (7, 8)

2.  Verschleißüberwachungsvorrichtung nach Anspruch 1, dadurch gekennzeichnet, daß der zweite Sensor (12) den Verschiebeweg (Z) des Bremssattels (1) gegenüber der Betätigungseinrichtung (6) beim Bremsen erfaßt.

3.  Verschleißüberwachungsvorrichtung nach Anspruch 1 oder 2, dadurch gekennzeichnet, daß der erste Sensor (13b) ein in den Belag (7, 8) integriertes und sich mit dem Belag abnützendes Element aufweist.

4.  Verschleißüberwachungsvorrichtung nach Anspruch 1 oder 2, dadurch gekennzeichnet, daß der erste Sensor (13b) ein Drucksensor ist.

5.  Verschleißüberwachungsvorrichtung nach einem der vorangehenden Ansprüche, dadurch gekennzeichnet, daß der Bremssattel (1) eine Aufnahmeöffnung (5) für die Betätigungseinrichtung (6) aufweist, wobei der zweite Sensor (12) in Ausnehmungen (10a,10b,19) an der Innenfläche der Aufnahmeöffnung (5), im Bremssattel (1) bzw. an der Mantelfläche der Betätigungseinrichtung (6) angeordnet ist.

6.  Verschleißüberwachungsvorrichtung nach einem der vorangehenden Ansprüche, dadurch gekennzeichnet, daß der zweite Sensor (12) ein Verschiebepotentiometer ist.

7.  Verschleißüberwachungsvorrichtung nach einem der vorangehenden Ansprüchen gekennzeichnet durch eine Einrichtung (12a) zum Umsetzen der Drehbewegung einer Nachstellspindel (6a) in eine dem kumulierten Verschleiß (Z) entsprechenden translatorischen Bewegung.

8.  Verschleißüberwachungsvorrichtung nach einem der vorangehenden Ansprüche, dadurch gekennzeichnet, daß die Anzeigeeinrichtung (21, 22) einen bei Erreichen eines Grenzverschleißes des betätigungsseitigen Bremsbelages (7) aktivierten Alarmgeber aufweist.

9.  Verschleißüberwachungsvorrichtung nach einem der vorangehenden Ansprüche, dadurch gekennzeichnet, daß der erste Sensor (13b) das Erreichen eines vorbestimmten Grenzverschleißes an dem betätigungsseitigen Bremsbelag (7) erfaßt.

10. Verschleißüberwachungsvorrichtung nach einem der Ansprüche 1 bis 8, dadurch gekennzeichnet, daß der erste Sensor (13a) den Verschleiß des felgenseitigen Bremsbelages (8) erfaßt und eine Auswerteinrichtung (25, $R_1$ bis $R_4$) aus dem kumulierten Verschleiß beider Bremsbeläge (7, 8) sowie dem Verschleiß des felgenseitigen Bremsbelages (8) den Verschleiß des betätigungsseitigen Bremsbelages (7) ermittelt.

11. Verschleißüberwachungsvorrichtung nach Anspruch 10, dadurch gekennzeichnet, daß der erste Sensor (13a) ein Verschiebepotentiometer ist.

12. Verschleißüberwachungsvorrichtung nach Anspruch 10 oder 11, dadurch gekennzeichnet, daß der Bremssattel (1) auf mindestens einem Gleitbolzen (2) geführt ist, welcher fest an einem Bremsenträger (3) angebracht ist, wobei der erste Meßwertgeber (13a) den Verschiebeweg (X) des Bremssattels (1) bezüglich dem Gleitbolzen (2) aufnimmt.

13. Verschleißüberwachungsvorrichtung nach Anspruch 12, dadurch gekennzeichnet, daß der erste Sensor (13a) in Ausnehmungen (11a, 20) an der Innenfläche einer den Gleitbolzen (2) aufnehmenden Führungsbohrung (9) bzw. an der Mantelfläche des Gleitbolzens (2) angeordnet ist.

14. Verschleißüberwachungsvorrichtung nach einem der Ansprüche 11 bis 13, dadurch gekennzeichnet, daß die Auswerteinrichtung (25, $R_1$ bis $R_4$) einen Operationsverstärker umfaßt.

**15.** Verschleißüberwachungsvorrichtung nach einem der vorangehenden Ansprüche, gekennzeichnet durch eine Einrichtung (23, 24) für den Nullpunktabgleich im Hinblick auf das Lüftspiel ($L_1$, $L_2$) der Bremse.

**Claims**

**1.** Brake pad wear indicating unit for a floating caliper disc brake with one brake disc (4), a floating and the brake disc (4) straddling caliper (1), one outboard brake pad / backing plate assembly (8), and one inboard brake pad / backing plate assembly (7), whereby the wear indicating unit utilised initial sensors (13a, 13b) to determine wear of the individual brake pads (7,8) and an additional wear indicating unit (21, 22), characterised by a second sensor (12) for the measurement of cumulative wear for both brake pads (7, 8).

**2.** Wear indicating unit, according to claim 1, characterised by the second sensor (12) measuring travel / displacement (Z) of the brake caliper (1) versus actuating unit (6) during the brake cycle.

**3.** Wear indicating unit, according to claim 1 or 2, characterised by the first sensor (13b) utilising a brake pad (7,8) integrated sensing element which wears simultaneously with the brake pad friction material.

**4.** Wear indicating unit, according to claim 1 or 2, characterised by the first sensor (13b) being a pressure sensor.

**5.** Wear indicating unit, according to one of the previously stated claims, characterised by an opening (5) in the brake caliper (1) for the actuating unit (6), whereby the second sensor (12) is located in recesses (10a, 10b, 19) on the inside of the opening (5) in the brake caliper and housing surface of the actuating unit.

**6.** Wear indicating unit, according to one of the previously stated claims, characterised by the second sensor (12) being a displacement potentiometer.

**7.** Wear indicating unit, according to one of the previously stated claims, characterised by a device (7) to convert rotation of an adjuster spindle (6a) into translatory movement corresponding to cumulative wear (Z).

**8.** Wear indicating unit, according to one of the previously stated claims, characterised by an indicator unit (21, 22) activating an alarm transmitter when the inboard brake pad (7) reaches a minimum threshold thickness value.

**9.** Wear indicating unit, according to one of the previously stated claims, characterised by the first sensor (13b) indicating when a predetermined minimum brake pad (7) thickness value has been reached.

**10.** Wear indicating unit, according to claims 1 to 8, characterised by the first sensor (13a) determining wear of the outboard brake pad (8) and an evaluating unit (25, $R_1$ to $R_4$) determining cumulative wear of both brake pads (7, 8) and the wear of the outboard brake pad to determine wear of the inboard brake pad (7).

**11.** Wear indicating unit, according to claim 10, characterised by the first sensor (13a) being a displacement potentiometer.

**12.** Wear indicating unit, according to claim 10 or 11, characterised by the brake caliper (1) being guided by at least one guide pin (2) which is mounted rigid to the torque plate (3), whereby the primary element (13a) senses displacement (X) of the brake caliper (1) in relationship to the guide pin (2).

**13.** Wear indicating unit, according to claim 12, characterised by the first sensor (13a) being installed in recessed areas (11a, 20) on the inside of the guide pin (2) pilot hole (9) or guide pin jacket (2).

**14.** Wear indicating unit, according to claims 11 to 13, characterised by an evaluating unit (25, $R_1$ to $R_4$) incorporating an operational amplifier.

**15.** Wear indicating unit, according to one of the previously stated claims, characterised by a device (23, 24) to balance the zero point in relationship to the air gap ($L_1$, $L_2$) of the brake.

**Revendications**

1. Dispositif de surveillance d'usure pour un frein à disque à étrier glissant, avec un disque de freinage (4), un étrier déplaçable (1) passant sur le disque de freinage (4), une première garniture de frein (8) applicable sous pression par un dispositif d'actionnement (6) par l'étrier (1) côté jante au disque de freinage (4) et une deuxième garniture de frein (7) applicable sous pression directement par le dispositif d'actionnement (6), côté actionnement au disque de freinage (4), le dispositif de surveillance d'usure présentant un premier capteur (13a, 13b) de l'usure d'une des garnitures de frein (7, 8) ainsi qu'un dispositif indicateur d'usure (21, 22), caractérisé par un deuxième capteur (12) de l'usure cumulée des deux garnitures de frein (7, 8).

2. Dispositif de surveillance d'usure selon la revendication 1, caractérisé en ce que le deuxième capteur (12) détecte le trajet de déplacement (Z) de l'étrier (1) par rapport au dispositif d'actionnement (6) lors du freinage.

3. Dispositif de surveillance d'usure selon la revendication 1 ou 2, caractérisé en ce que le premier capteur (13b) présente un élément intégré dans la garniture (7, 8) et s'usant avec la garniture.

4. Dispositif de surveillance d'usure selon la revendication 1 ou 2, caractérisé en ce que le premier capteur (13b) est un capteur de pression.

5. Dispositif de surveillance d'usure selon l'une des revendications précédentes, caractérisé en ce que l'étrier (1) présente une ouverture de réception (5) pour le dispositif d'actionnement (6), le deuxième capteur (12) étant disposé dans des évidements (10a, 10b, 19) à la surface inférieure de l'ouverture de réception (5), dans l'étrier (1) et, respectivement à la surface d'enveloppe du dispositif d'actionnement (6).

6. Dispositif de surveillance d'usure selon l'une des revendications précédentes, caractérisé en ce que le deuxième capteur (12) est un potentiomètre de déplacement.

7. Dispositif de surveillance d'usure selon l'une des revendications précédentes, caractérisé par un dispositif (12a) pour transformer un mouvement de rotation d'une tige d'ajustage (6a) en un mouvement translatoire correspondant à l'usure cumulée (Z).

8. Dispositif de surveillance d'usure selon l'une des revendications précédentes, caractérisé en ce que le dispositif indicateur (21, 22) comporte une alarme activée lors de l'atteinte d'une usure limite de la garniture de frein côté actionnement (7).

9. Dispositif de surveillance d'usure selon l'une des revendications précédentes, caractérisé en ce que le premier capteur (13b) détecte l'atteinte d'une usure limite prédéterminée à la garniture de frein côté actionnement (7).

10. Dispositif de surveillance d'usure selon l'une des revendications 1 à 8, caractérisé en ce que le premier capteur (13a) détecte l'usure de la garniture de frein côté jante (8) et qu'un dispositif d'évaluation (25, $R_1$ à $R_4$) détermine à partir de l'usure cumulée des deux garnitures de frein (7, 8) ainsi qu'à partir de l'usure de la garniture de frein côté jante (8) l'usure de la garniture de frein côté actionnement (7).

11. Dispositif de surveillance d'usure selon la revendication 10, caractérisé en ce que le premier capteur (13a) est un potentiomètre de déplacement.

12. Dispositif de surveillance d'usure selon la revendication 10 ou 11, caractérisé en ce que l'étrier (1) est guidé sur au moins un boulon de glissement (2) qui est monté fixement sur un support de frein (3), le premier capteur de mesure (13a) détectant le trajet de déplacement (X) de l'étrier (1) relativement au boulon de glissement (2).

13. Dispositif de surveillance d'usure selon la revendication 12, caractérisé en ce que le premier capteur (13a) est disposé dans des évidements (11a, 20) à la surface intérieure d'un perçage de guidage (9) recevant le boulon de glissement (2) et, respectivement à la surface enveloppante du boulon de glissement (2).

14. Dispositif de surveillance d'usure selon l'une des revendications 11 à 13, caractérisé en ce que le dispositif d'évaluation (25, $R_1$ à $R_4$) comporte un amplificateur opérationnel.

15. Dispositif de surveillance d'usure selon l'une des revendications précédentes, caractérisé par un dispositif (23, 24) pour le réglage à zéro se rapportant au jeu d'aération ($L_1$, $L_2$) du frein.

Fig. 1

Fig. 2

EP 0 567 155 B1

Fig. 3

*Fig. 4*